# DEMANDE DE BREVET EUROPEEN

(11) **EP 4 826 339 A1**
(43) Date de publication de la demande: **21.10.2026**
(21) Numéro de dépôt: 26172590.7
(22) Date de dépôt: 15.04.2026
(51) Int. Cl.: G01G 19/08

(54) **PROCÉDÉ D`ESTIMATION EN TEMPS RÉEL DE LA MASSE EMBARQUÉE D`UN VÉHICULE**

(30) Priorité: 15.04.2025 FR 2504025
(71) Demandeur: AMPERE s.a.s., 92100 Boulougne-Billancourt (FR)
(72) Inventeur: BOUVIN, Jean-Louis, 06560 VALBONNE (FR)
(74) Mandataire: Renault Group

(57) **Abrégé**

La présente invention concerne un procédé d'estimation (10) en temps réel d'une masse embarquée d'un véhicule automobile équipé d'un système de surveillance de pression des pneumatiques, comprenant :
- une étape de calibrage (11) comprenant :
- une première étape de calcul (21) d'une valeur de pression de chaque pneumatique du véhicule automobile,
- une deuxième étape de calcul (22) d'une valeur de section efficace de chaque pneumatique,

- une étape de mesure dynamique (12) comprenant :
- une troisième étape de calcul (23) d'une valeur de pression de chaque pneumatique du véhicule automobile,
- une quatrième étape de calcul (24) de la masse embarquée du véhicule automobile à partir des valeurs de pression de chaque pneumatique et des valeurs de section efficace de chaque pneumatique.

L'invention couvre également un véhicule automobile mettant en œuvre un tel procédé.

## Description

La présente invention se rapporte au domaine des véhicules automobiles et concerne plus particulièrement un procédé d'estimation en temps réel d'une masse embarquée dudit véhicule automobile.

Certains véhicules automobiles sont munis de suspensions actives ou semi-actives leur permettant de régler un niveau de suspension afin d'adapter la suspension du véhicule automobile à sa vitesse. Les pneumatiques du véhicule automobile sont équipés de capteurs recueillant des données, et ces données sont par la suite utilisées pour, en fonction de la situation, augmenter ou réduire la pression des amortisseurs. Le véhicule automobile s'adapte ainsi mieux aux différents obstacles rencontrés, et il en résulte une amélioration du confort des occupants du véhicule automobile, notamment par une réduction du tangage du véhicule automobile, une limitation des secousses au sein du véhicule automobile lorsque la route est usée et inégale, ou encore une meilleure tenue de route en cas de manœuvres brusques du véhicule automobile.

Si ce type de suspension est optimisé en fonction de la vitesse du véhicule automobile, une adaptation des suspensions en fonction de la masse embarquée du véhicule automobile est encore peu connue. La masse embarquée du véhicule automobile est un facteur susceptible d'être fortement différent selon la situation, par exemple en fonction du nombre de passagers dans le véhicule automobile ou bien si le véhicule automobile est chargé de marchandises ou de bagages. De plus, la masse embarquée du véhicule automobile est susceptible de varier au cours d'un seul et même trajet, par exemple suite à un arrêt temporaire pour un dépôt ou un embarquement de passagers ou de bagages.

Certains systèmes embarqués peuvent estimer la masse embarquée du véhicule automobile, mais ceux-ci mettent en œuvre le principe fondamental de la dynamique et nécessitent donc une phrase de roulage du véhicule automobile pour estimer la masse embarquée. Etant donné que des potentielles variations de la masse embarquée du véhicule automobile surviennent lors d'un arrêt du véhicule automobile, il y a donc forcément une phrase de roulage, immédiatement après l'arrêt, au cours de laquelle les suspensions ne sont pas adaptées à la masse embarquée du véhicule automobile le temps que cette dernière soit prise en compte pour l'adaptation des suspensions.

La présente invention s'inscrit dans ce contexte et propose à ce titre un procédé d'estimation en temps réel d'une masse embarquée d'un véhicule automobile équipé d'un système de surveillance de pression des pneumatiques dudit véhicule automobile, comprenant :
- une étape de calibrage avant une session de roulage du véhicule automobile comprenant :
   - une première étape de calcul d'une valeur de pression de chaque pneumatique du véhicule automobile à l'aide du système de surveillance de pression des pneumatiques,
   - une deuxième étape de calcul d'une valeur de section efficace de chaque pneumatique à partir des valeurs de pression de chaque pneumatique calculées lors de la première étape de calcul et d'une masse initiale et des dimensions du véhicule automobile,
   - une étape de mesure dynamique au cours d'une session de roulage du véhicule automobile comprenant :
      - une troisième étape de calcul d'une valeur de pression de chaque pneumatique du véhicule automobile à l'aide du système de surveillance de pression des pneumatiques,
      - une quatrième étape de calcul de la masse embarquée du véhicule automobile à partir des valeurs de pression de chaque pneumatique calculées lors de la troisième étape de calcul et des valeurs de section efficace de chaque pneumatique calculées lors de la deuxième étape de calcul.

Le procédé d'estimation selon l'invention permet ainsi de détourner l'utilisation du système de surveillance de pression des pneumatiques afin de déterminer la masse embarquée du véhicule automobile à l'arrêt. Le fait de connaître cette masse embarquée à l'arrêt et d'adapter les paramètres du véhicule automobile en conséquence permet d'opter pour la configuration optimale du véhicule automobile dès le début du trajet, sans que le véhicule automobile ne doive rouler pendant une période de temps donnée avec des paramètres non adéquats.

L'étape de calibrage est mise en œuvre à l'arrêt, préférentiellement avant chaque trajet du véhicule automobile. Le système de surveillance de pression des pneumatiques mesure la pression puis la section efficace de chacun des pneumatiques en est déduite. Par section efficace, il faut comprendre qu'il s'agit d'une section de chaque pneumatique calculée préférentiellement lorsque le véhicule automobile est sur un sol plat, à partir de données constantes et de la pression de chaque pneumatique précédemment calculée. La masse initiale du véhicule automobile correspond à la masse du véhicule automobile à vide et les dimensions du véhicule automobile sont également invariables.

L'étape de mesure dynamique peut quant à elle être effectuée à plusieurs reprises au cours d'un même trajet, prenant ainsi en compte les potentielles variations de la masse embarquée au cours du trajet et pouvant ainsi adapter les suspensions du véhicule automobile en temps réel et de manière optimale.

Selon une caractéristique du procédé, la première étape de calcul et la troisième étape de calcul sont mises en œuvre en prenant en compte une température de chaque pneumatique, ladite température étant mesurée par le système de surveillance de pression des pneumatiques. D'une manière évidente, lorsque la température des pneumatiques varie, la pression varie également. Ainsi, la température ambiante influe directement sur la pression des pneumatiques. Les différentes variations de pression des pneumatiques peuvent donc être dues à une variation de température et non pas nécessairement à la masse embarquée du véhicule automobile qui générerait une augmentation de la pression des pneumatiques. La température est donc avantageusement prise en compte afin d'éviter qu'elle soit trompeuse lors de l'interprétation de la valeur de pression mesurée.

L'air répondant à l'équation des gaz parfaits, celle-ci est utilisée pour effectuer une comparaison des pressions à iso-température, avec P la pression de l'air en Pascal, V le volume occupé en m3, n la quantité de matière en mol, R la constante des gaz parfaits et T_{K} la température absolue en Kelvin. La pression est ainsi déterminée pour une température interne servant de référence de calcul.

Selon une caractéristique du procédé, lors de la deuxième étape de calcul, la masse initiale et les dimensions du véhicule automobile sont établies par défaut en fonction d'un modèle du véhicule automobile. Ces données constantes peuvent par exemple être retrouvées sur une fiche technique du véhicule automobile. Par défaut, ces données peuvent également être intégrées de base dans le logiciel de stockage mémoire du véhicule automobile.

Selon une caractéristique du procédé, ce dernier comprend une étape préliminaire, antérieure à chacune des étapes de calcul, de détermination d'au moins une inclinaison d'une route sur laquelle le véhicule automobile est à l'arrêt. La prise en compte de l'inclinaison de la route participe à rendre l'estimation de la masse embarquée plus pertinente et représentative de la réalité.

Selon une caractéristique de l'invention, l'inclinaison de la route est déterminée à l'aide d'une centrale inertielle du véhicule automobile. Une telle centrale inertielle peut être spécifiquement dédiée pour mesurer l'inclinaison de la route, ou bien peut mesurer l'attitude du véhicule automobile et en déduire l'inclinaison de la route à l'aide d'un filtrage complémentaire et en émettant l'hypothèse que l'inclinaison du véhicule automobile et l'inclinaison de la route sont identiques.

Selon une caractéristique du procédé, une inclinaison longitudinale et une inclinaison transversale sont déterminées et prises en compte. Autrement dit, l'inclinaison de la route est déterminée sur deux dimensions. Ces valeurs d'inclinaison permettent de déterminer si le véhicule automobile est incliné vers l'avant, vers l'arrière ou de manière latérale.

Selon une caractéristique du procédé, la deuxième étape de calcul comprend une première sous-étape de calcul de la répartition des efforts par pneumatique du véhicule automobile en fonction de la masse initiale du véhicule automobile et des distances entre les pneumatiques et une composante verticale du poids du véhicule automobile passant par un centre de gravité du véhicule automobile, lesdites distances étant déduites des dimensions du véhicule automobile, et une deuxième sous-étape de calcul, postérieure à la première sous-étape de calcul, de la section efficace de chaque pneumatique à partir des valeurs de répartition des efforts de chaque pneumatique du véhicule automobile.

Le centre de gravité du véhicule automobile est notamment déterminé en fonction des dimensions du véhicule automobile à l'arrêt. La masse embarquée du véhicule automobile est alors répartie entre les pneumatiques en fonction de la position du centre de gravité. Lorsque le centre de gravité est parfaitement centré et que le véhicule est sur une route plane, la masse est parfaitement équilibrée sur les quatre roues du véhicule. Lorsque le véhicule automobile est à l'arrêt sur une route inclinée, la répartition de la masse embarquée du véhicule automobile dépend de la position du centre de gravité et de la distance des pneumatiques avec une droite verticale passant par le centre de gravité, la distance étant notamment variable entre les pneumatiques avant et arrière.

Deux méthodes de calcul pour la répartition des efforts peuvent être mises en œuvre pour calculer la répartition des efforts par pneumatique. La première méthode de calcul peut être un calcul simplifié, à partir duquel on part du principe que le véhicule automobile est à l'arrêt sur une route d'inclinaison nulle et pour un centre de gravité parfaitement centré. Les efforts sont répartis sur chacun des pneumatiques en fonction de la position du centre de gravité et des dimensions du véhicule automobile. Ainsi, les distances longitudinales et transversales de chaque pneumatique par rapport au centre de gravité sont connues pour chacun des pneumatiques, garantissant un calcul simplifié des efforts par pneumatique et par conséquent de la section efficace de chacun desdits pneumatiques.

La deuxième méthode de calcul, plus complexe, prend en compte une éventuelle inclinaison de la route tel que décrit précédemment. Dans cette configuration, et si la route présente effectivement au moins un angle d'inclinaison non nul, le poids du véhicule automobile, et donc la masse embarquée, n'est pas uniquement compensé par les réactions des pneumatiques, mais aussi grâce aux actions des freins et frottements. Seule la projection selon l'axe vertical du véhicule est à prendre en compte dans la répartition des efforts de chaque pneumatique. Le calcul résultant prend ainsi en compte ces angles d'inclinaisons pour calculer la répartition des efforts de chaque pneumatique et la section efficace de chacun d'entre eux qui en résulte.

Selon une caractéristique du procédé, au cours de ce dernier, l'étape de mesure dynamique est réitérée à chaque arrêt du véhicule automobile. Un arrêt du véhicule automobile signifie possiblement un changement de la masse embarquée du véhicule automobile. Dans une telle configuration, la pression de chaque pneumatique est de nouveau calculée afin d'en déduire une potentielle nouvelle masse embarquée du véhicule automobile et de modifier les paramètres de suspension du véhicule automobile en cas de besoin. Il n'est pas nécessaire de réitérer l'étape de calibrage, cette dernière étant uniquement mise en œuvre à l'arrêt avant l'initiation du trajet du véhicule automobile.

Selon une caractéristique du procédé, au cours de ce dernier, l'étape de mesure dynamique est réitérée à chaque arrêt du véhicule automobile dont la durée est supérieure à une période de temps de 120 secondes. D'une manière avantageuse, les arrêts courts, dont la durée est inférieure à la période de temps de 120 secondes, par exemple un arrêt à un stop ou à un feu rouge, ne sont pas pris en compte pour réitérer l'étape de mesure dynamique car ce sont des arrêts qui n'impliquent pas de potentiels changements de masse embarquée du véhicule automobile. Ainsi, un arrêt prolongé au cours d'une période de temps supérieure à 120 secondes est considéré comme un arrêt impliquant potentiellement une augmentation ou une diminution de la masse embarquée du véhicule automobile, car il s'agit d'une période de temps au cours de laquelle un embarquement ou un débarquement de passagers et/ou un chargement ou déchargement de marchandises ou bagages peut survenir. Une telle configuration permet d'éviter de réitérer l'étape de mesure dynamique de manière superflue.

Selon une caractéristique du procédé, au cours de ce dernier, l'étape de mesure dynamique est réitérée à chaque arrêt du véhicule automobile au cours duquel un événement défini se produit. De manière alternative ou additionnelle à la prise en compte de la période de temps, l'étape de mesure dynamique peut être réitérée au cours d'un événement pouvant être synonyme d'un embarquement ou un débarquement de passagers et/ou un chargement ou déchargement de marchandises ou bagages. Un exemple d'événement défini peut être l'ouverture d'une portière du véhicule automobile, signifiant potentiellement qu'un ou plusieurs passagers sont montés ou descendus du véhicule automobile. Un autre événement défini de ce type peut être l'ouverture du coffre du véhicule automobile, signifiant potentiellement que des marchandises ou bagages ont été chargés ou déchargés du véhicule automobile. Ces deux événements impliquant potentiellement une variation de la masse embarquée du véhicule automobile, il peut être judicieux de réitérer l'étape de mesure dynamique en conséquence.

L'invention couvre également un véhicule automobile comprenant un système de surveillance de pression des pneumatiques apte à mesurer une pluralité de données liées aux pneumatiques dudit véhicule automobile et au moins un module de commande configuré pour calculer une masse embarquée du véhicule automobile à partir des données mesurées par le système de surveillance de pression des pneumatiques, le véhicule automobile étant apte à mettre en œuvre un procédé d'estimation en temps réel de la masse embarquée du véhicule automobile tel que décrit précédemment.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] est une représentation schématique d'un véhicule automobile selon l'invention vu de côté,
[Fig.2] est un logigramme simplifié d'un procédé d'estimation d'une masse embarquée du véhicule automobile,
[Fig.3] est un logigramme détaillé du procédé d'estimation,
[Fig.4] est une représentation schématique du véhicule automobile vu de côté et à l'arrêt sur une route inclinée selon une inclinaison longitudinale,
[Fig.5] est une représentation schématique du véhicule automobile vu de dos et à l'arrêt sur une route inclinée selon une inclinaison transversale.

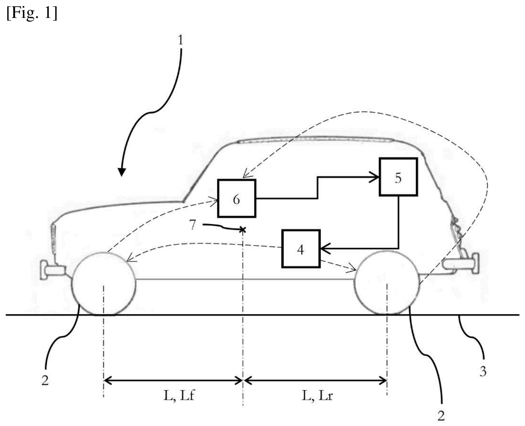

La [Fig.1] est une illustration d'un véhicule automobile 1 selon l'invention, vu de côté. Le véhicule automobile 1 est équipé de quatre pneumatiques 2, chacun étant associé d'un dispositif de suspension non représenté, les quatre pneumatiques 2 étant en contact d'une route 3 sur laquelle le véhicule automobile 1 repose. Chacun des dispositifs de suspension permet d'amortir les chocs et autres secousses susceptibles d'être ressentis par les occupants du véhicule automobile 1 au cours d'un trajet de celui-ci. Le véhicule automobile 1 est par ailleurs équipé d'un système de suspension 4 gérant l'ensemble des dispositifs de suspension suscités, et ce système de suspension 4 est un système actif ou au moins semi-actif, c'est-à-dire qu'il adapte un niveau de suspension pour chacun des pneumatiques 2 en fonction de différents paramètres, par exemple en fonction de la vitesse du véhicule automobile 1 en session de roulage SR.

Le véhicule automobile 1 présente une masse embarquée donnée, c'est-à-dire une masse supérieure à une masse du véhicule automobile 1 à vide, du fait de la présence du conducteur ainsi que, éventuellement, d'un certain nombre de passagers occupant le véhicule automobile 1. Le véhicule automobile 1 peut également inclure des éléments matériels tels que des marchandises ou des bagages qui sont transportés au cours d'un trajet effectué par le véhicule automobile 1. Tous ces facteurs peuvent ainsi jouer sur la masse embarquée du véhicule automobile 1.

Le véhicule automobile 1 comprend également un module de commande 5 et un système de surveillance 6 de pression des pneumatiques. Selon l'invention, le module de commande 5 participe à la mise en œuvre d'un procédé d'estimation en temps réel de la masse embarquée du véhicule automobile 1. Un tel procédé selon l'invention permet, une fois la masse embarquée du véhicule automobile 1 connue, d'adapter également le niveau de suspension en fonction de la masse embarquée du véhicule automobile 1, celle-ci pouvant énormément varier en fonction du nombre de passagers présents dans le véhicule automobile 1 ainsi que de la potentielle quantité de marchandises ou bagages transportées au sein dudit véhicule automobile 1.

Tel que cela sera détaillé par la suite, le procédé d'estimation comprend une pluralité d'étapes de calcul et une partie de celles-ci est notamment dépendante d'une valeur de pression de chaque pneumatique 2. Le système de surveillance 6 de pression des pneumatiques, en plus d'assurer sa fonction principale de surveillance de pression, mesure donc la pression de chacun des pneumatiques 2 dans le but de déduire la masse embarquée du véhicule automobile 1.

Une fois la masse embarquée du véhicule automobile 1 obtenue, les suspensions du véhicule automobile 1 peuvent être également adaptées à ladite masse embarquée afin d'offrir un confort optimal aux occupants du véhicule automobile 1. De plus, la masse embarquée du véhicule automobile 1 peut être estimée alors que ce dernier est encore à l'arrêt, ce qui évite ainsi d'effectuer une partie du trajet avec les dispositifs de suspension non encore adaptés à la masse embarquée du véhicule automobile 1.

Sur la [Fig.1] sont également illustrés un centre de gravité 7 du véhicule automobile ainsi que des distances entre les pneumatiques 2 et le centre de gravité 7 du véhicule automobile 1 qui seront détaillés par la suite, la figure illustrant ici plus particulièrement la composante longitudinale des distances.

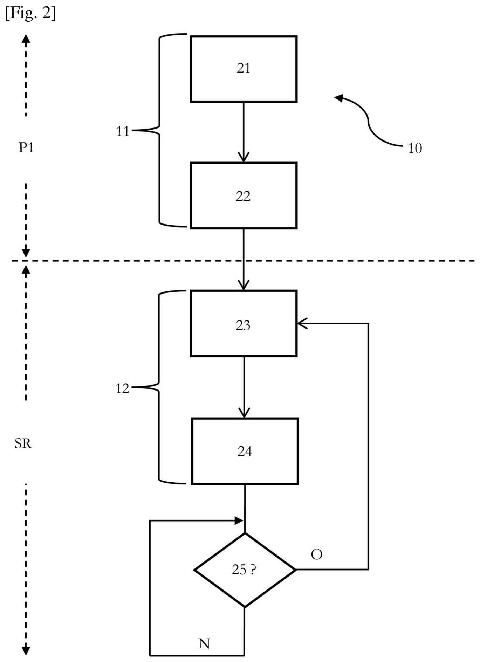

La [Fig.2] illustre un logigramme simplifié du procédé d'estimation 10 selon l'invention et mentionné précédemment. Le procédé d'estimation 10 se caractérise en ce qu'il comprend une étape de calibrage 11 et une étape de mesure dynamique 12. L'étape de calibrage 11 est faite avantageusement dans une phase initiale d'arrêt P1, juste avant une session de roulage SR, du véhicule automobile, tandis que l'étape de mesure dynamique 12 peut être réitérée au cours de la session de roulage, selon des conditions spécifiques détaillées par la suite.

L'étape de calibrage 11 comprend une première étape de calcul 21 d'une valeur de pression de chaque pneumatique du véhicule automobile à l'aide du système de surveillance de pression des pneumatiques décrit précédemment. Ce système de surveillance est ainsi détourné de sa fonction principale, qui est de surveiller la pression de pneumatiques afin de s'assurer que ceux-ci ne sont pas trop gonflés ou pas assez. Les valeurs de pression sont ainsi précisément mesurées pour chaque pneumatique du véhicule automobile et ces valeurs de pression sont utilisées par la suite pour une deuxième étape de calcul 22, postérieure à la première étape de calcul 21, et permettant de calculer une valeur de section efficace de chaque pneumatique. Par section efficace de chaque pneumatique, il faut comprendre que cela correspond à une surface pour chaque pneumatique en mètre carré, ladite section efficace variant notamment en fonction de la pression de chaque pneumatique. Les détails concernant les différentes étapes de calcul seront décrits par la suite.

Comme cela a été mentionné précédemment, l'étape de calibrage 11 n'est effectuée qu'une seule fois par session de roulage, préférentiellement à l'arrêt avant le début de la session de roulage SR, lors d'une phase initiale d'arrêt P1.

Par session de roulage SR, il convient de comprendre une période au cours de laquelle le véhicule automobile circule par séquences, entrecoupées d'arrêts ponctuels le cas échéant, et qui fait suite à un arrêt prolongé du véhicule, par exemple de plusieurs heures. Lors des arrêts ponctuels qui peuvent se produire dans la session de roulage, ces arrêts ponctuels pouvant être de l'ordre de la minute, le moteur peut continuer à tourner ou bien être arrêté ponctuellement.

L'étape de mesure dynamique 12 comprend une troisième étape de calcul 23 et une quatrième étape de calcul 24. La troisième étape de calcul 23 est identique à la première étape de calcul 21, c'est-à-dire que les valeurs de pression de chaque pneumatique sont calculées à partir de mesures par le système de surveillance de pression.

Puis, la quatrième étape de calcul 24 est mise en œuvre pour calculer la masse embarquée du véhicule automobile, à partir des valeurs de pression venant d'être calculées lors de la troisième étape de calcul 23, ainsi que des valeurs de section calculées lors de l'étape de calibrage 11, plus particulièrement lors de la deuxième étape de calcul 22.

À la suite de la quatrième étape de calcul 24, la masse embarquée du véhicule automobile est ainsi connue et le système de suspension évoqué précédemment peut, via le module de commande, adapter la suspension de chaque pneumatique et ainsi améliorer le confort des occupants du véhicule automobile.

Tel que cela a été mentionné précédemment, l'étape de mesure dynamique 12 peut être réitérée au cours de la session de roulage SR du véhicule automobile. Avantageusement, l'étape de mesure dynamique 12 est réitérée en cas d'arrêt lors de cette session de roulage SR du véhicule automobile. Il convient de comprendre que l'on vise ici des arrêts ponctuels du véhicule distincts des phases d'arrêt prolongées préalables à la session de roulage, telle qu'elle vient d'être décrit précédemment. En effet, c'est au cours des arrêts du véhicule automobile que la masse embarquée de celui-ci est susceptible de changer, un arrêt signifiant un potentiel embarquement et/ ou débarquement de passagers, ou encore un potentiel chargement et/ou déchargement de marchandises ou bagages contenus dans un espace de stockage du véhicule automobile tel que le coffre dudit véhicule automobile. Lorsqu'un changement de masse embarquée survient, les suspensions ne sont alors plus adaptées à la nouvelle masse embarquée du véhicule automobile, d'où une réitération de l'étape de mesure dynamique 12 afin de déterminer la nouvelle masse embarquée du véhicule automobile et d'adapter les suspensions en conséquence.

Selon l'invention, l'étape de mesure dynamique 12 est réitérée en cas de détection d'une situation 25 estimée comme nécessitant une mise à jour de la masse embarquée. Tant qu'un tel évènement 25 n'est pas détecté, aucun calcul propre à cette étape de mesure dynamique n'est effectué de nouveau.

D'une manière avantageuse, seuls les arrêts prolongés, c'est-à-dire les arrêts d'une période de temps minimum de 120 secondes formant une situation 25 entraînant une réitération de l'étape de mesure dynamique 12. En effet, les arrêts dits courts, par exemple correspondant à un arrêt à un stop ou à un feu rouge, sont considérés comme trop courts pour entraîner une modification de la masse embarquée du véhicule automobile. Ainsi, le procédé d'estimation 10 peut ne prendre en compte que les arrêts supérieurs à une période de temps de 120 secondes, car il s'agit d'une période de temps suffisamment longue pour considérer qu'il y a eu un potentiel embarquement et/ou débarquement de passagers, ou encore un potentiel chargement et/ou déchargement de marchandises ou bagages, et donc que la masse embarquée du véhicule automobile a été modifiée, nécessitant ainsi une vérification en réitérant l'étape de mesure dynamique 12. On évite ainsi de lancer un calcul à chaque arrêt court qui n'ont pas d'effet sur la masse embarquée du véhicule, par exemple un arrêt à un feu rouge.

Alternativement, la situation 25 pour laquelle l'étape de mesure dynamique 12 peut être réitérée peut être un arrêt du véhicule automobile au cours duquel un événement défini se produit. Un tel événement défini peut être un événement relatif à un embarquement et/ou débarquement de passagers, par exemple l'ouverture d'une portière du véhicule automobile, qui est une étape nécessaire pour embarquer ou débarquer des passagers.

Un autre événement défini peut être l'ouverture du coffre du véhicule automobile, synonyme d'un potentiel chargement et/ou déchargement de marchandises ou bagages. Ainsi, l'un ou l'autre de ces événements définis peut être un déclencheur de la réitération de l'étape de mesure dynamique 12.

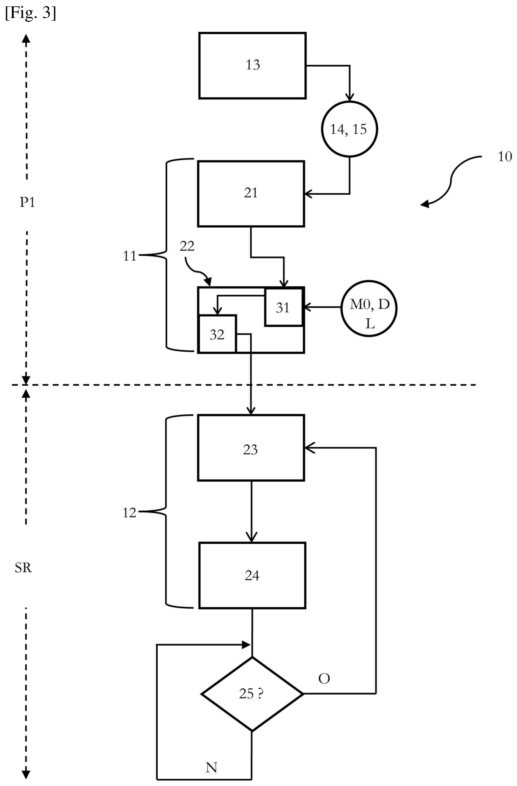

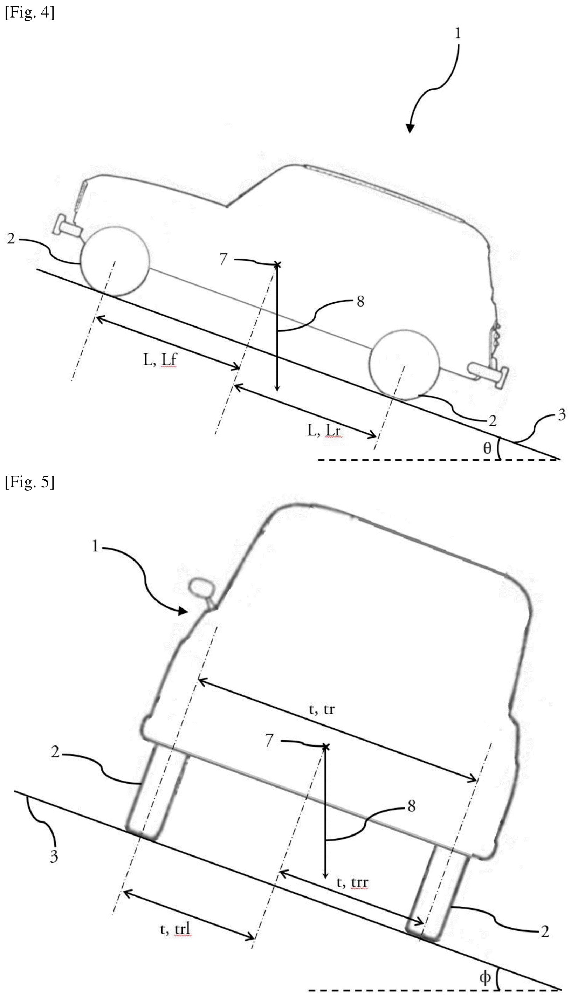

La [Fig.3] est un logigramme détaillé du procédé d'estimation 10 décrit précédemment, approfondissant davantage les différentes étapes de calcul se déroulant au cours dudit procédé d'estimation. Les figures 4 et 5 illustrent quant à elles respectivement une vue de côté et de dos du véhicule automobile 1 à l'arrêt sur une route 3 inclinée. Ces figures illustrent notamment différentes données qui sont utilisées au cours des différentes étapes de calcul du procédé d'estimation 10.

D'une manière avantageuse, le procédé d'estimation 10 comprend une étape préliminaire 13 déterminant l'inclinaison de la route 3. En effet, lorsque le véhicule automobile est à l'arrêt sur une route 3 inclinée, tel que cela est illustré sur la [Fig.4] ou la [Fig.5], la répartition des efforts exercés sur chaque pneumatique 2 dépend de la position du centre de gravité et de la projection du poids du véhicule automobile, ainsi que sa masse embarquée, selon un axe vertical 8 depuis le centre de gravité du véhicule. Le procédé d'estimation 10 prend donc en compte un angle d'inclinaison de la route 3 pour l'intégrer aux différents calculs se déroulant lors des étapes de calcul.

Tel que cela est illustré sur les figures 4 et 5, la route 3 peut être respectivement inclinée selon une inclinaison longitudinale θ et/ou selon une inclinaison transversale ϕ. Les potentielles composantes directionnelles sont prises en compte pour déterminer l'inclinaison de la route 3. L'inclinaison longitudinale θ et l'inclinaison transversale ϕ peuvent par exemple être déterminées par une centrale inertielle du véhicule automobile 1.

Tel que cela a été décrit précédemment, les valeurs de pression de chaque pneumatique 2 sont mesurées par le système de surveillance de pression des pneumatiques. Toutefois, avantageusement, la température des pneumatiques 2 est également mesurée, afin de déterminer si une variation de pression n'est pas due à une variation de température, laquelle pouvant être trompeuse pour la mesure de pression et donc pour l'estimation de la masse embarquée du véhicule automobile 1.

L'air répondant à l'équation des gaz parfaits, celle-ci est utilisée pour effectuer une comparaison des pressions à iso-température, de la manière suivante :
$P ⋅ V = n ⋅ R ⋅ {T}_{K}$
avec P la pression absolue de l'air en Pascal, V le volume occupé en m3, n la quantité de matière en mol, R la constante des gaz parfaits et T_{K} la température absolue en Kelvin. L'influence de la température sur la pression de chaque pneumatique 2 est donc prise en compte afin de calculer une pression représentative de la masse embarquée du véhicule automobile 1.

La pression relative P₁ en Pascal (ou pression absolue P₀) pour une température interne rapportée à une référence de calcul T₀ exprimée en degrés Celsius peut alors se calculer de la manière suivante :
${P}_{1} = \left(\frac{{P}_{m} + {P}_{atm}}{{T}_{0} + 273.15}⋅\left({T}_{c}+273.15\right)\right) - {P}_{atm}$
avec Pm la pression relative mesurée en Pascal par le système de surveillance de pression des pneumatiques, Patm la pression atmosphérique en Pascal et Tc la température mesurée en degrés Celsius.

Le calcul de la section efficace de chaque pneumatique 2 effectué lors de la deuxième étape de calcul 22 est quant à lui dépendant non seulement de la pression des pneumatiques 2 calculée lors de la première étape de calcul 21, mais également de plusieurs valeurs constantes que sont une masse initiale M₀ du véhicule automobile ainsi que des dimensions de ce dernier.

La masse initiale M₀ du véhicule automobile correspond à la masse de celui-ci à vide. Les dimensions sont également constantes et connues en fonction du modèle du véhicule automobile. Ces données peuvent par exemple être retrouvées sur une fiche constructeur et être préenregistrées dans un espace de stockage mémoire du module de commande décrit précédemment.

Par ailleurs, la deuxième étape de calcul 22, qui pour rappel permet de calculer les sections efficaces de chacun des pneumatiques 2 du véhicule automobile 1, est divisée en une première sous-étape de calcul 31 et en une deuxième sous-étape de calcul 32.

La première sous étape de calcul 31 permet de calculer la répartition des efforts par pneumatique 2 du véhicule automobile 1 en fonction de la masse initiale M₀ du véhicule automobile 1 et des distances, plus précisément les distances longitudinales L et les distances transversales t, entre les pneumatiques 2 et le centre de gravité 7 du véhicule automobile 1. On comprend ainsi l'importance de l'étape préliminaire 13 qui détermine l'inclinaison de la route 3 et donc du véhicule automobile 1.

Si la route 3 et le véhicule automobile 1 présentent une inclinaison nulle, les efforts par pneumatique 2 sont répartis sur les quatre pneumatiques 2 uniquement en fonction des dimensions du véhicule, simplifiant donc le calcul mis en œuvre lors de la première sous-étape de calcul 31. En cas de centre de gravité parfaitement centré, les distances L entre les pneumatiques 2 et le centre de gravité 7 sont égales les unes par rapport aux autres pour chaque pneumatique 2, tel que cela est illustré en [Fig.1].

Dans cette configuration, le calcul est le suivant :
${F}_{FL} + {F}_{FR} + {F}_{RL} + {F}_{RR} = {M}_{0} ⋅ g$
avec F_{FL} les efforts appliqués sur le pneumatique avant gauche, F_{FR} les efforts appliqués sur le pneumatique avant droit, F_{RL} les efforts appliqués sur le pneumatique arrière gauche et F_{RR} les efforts appliqués sur le pneumatique arrière droit.

La formule pour retrouver la valeur des efforts appliqués sur chaque pneumatique est alors la suivante :
$\left\{\begin{matrix}{F}_{FL} = \frac{{t}_{fr}}{{t}_{f}} ⋅ \frac{{L}_{r}}{{L}_{f} + {L}_{r}} ⋅ {M}_{0} ⋅ g \\ {F}_{FR} = \frac{{t}_{fl}}{{t}_{f}} ⋅ \frac{{L}_{r}}{{L}_{f} + {L}_{r}} ⋅ {M}_{0} ⋅ g \\ {F}_{RL} = \frac{{t}_{rr}}{{t}_{r}} ⋅ \frac{{L}_{f}}{{L}_{f} + {L}_{r}} ⋅ {M}_{0} ⋅ g \\ {F}_{RR} = \frac{{t}_{rl}}{{t}_{r}} ⋅ \frac{{L}_{f}}{{L}_{f} + {L}_{r}} ⋅ {M}_{0} ⋅ g\end{matrix}\right.$
avec g la force de pesanteur, Lf la distance longitudinale entre les pneumatiques avant et le centre de gravité 7, Lr la distance longitudinale entre les pneumatiques arrière et le centre de gravité 7, tf la distance transversale entre les pneumatiques avant, tfl la distance transversale entre le pneumatique avant gauche et le centre de gravité 7, tfr la distance transversale entre le pneumatique avant droit et le centre de gravité 7, tr la distance transversale entre les pneumatiques arrière, trl la distance transversale entre le pneumatique arrière gauche et le centre de gravité 7 et trr la distance transversale entre le pneumatique arrière droit et le centre de gravité 7.

Ainsi, dans l'hypothèse où le véhicule automobile 1 a un centre de gravité parfaitement centré entre les quatre roues et est sur une route non inclinée, le calcul est simplifié car les distances longitudinales L et transversales t sont égales entre elles. Les efforts appliqués sur chaque pneumatique sont égaux les uns par rapport aux autres : ${F}_{FL} = {F}_{RL} = {F}_{FR} = {F}_{RR} = \frac{1}{4} ⋅ {M}_{0} ⋅ g$

La deuxième sous-étape de calcul 32 consiste à calculer la section efficace de chaque pneumatique 2 à partir de la répartition des efforts calculée lors de la première sous-étape de calcul 31. Si l'inclinaison de la route 3 et du véhicule automobile 1 sont nulles, alors la deuxième sous-étape de calcul 32 est également simplifiée :
$\left\{\begin{matrix}{S}_{FL} = \frac{{F}_{FL}}{\left({P}_{{FL}_{0}}-{p}_{atm}\right)} = \frac{1}{\left({P}_{{FL}_{0}}-{p}_{atm}\right)} ⋅ \frac{{t}_{fr}}{{t}_{f}} ⋅ \frac{{L}_{r}}{{L}_{f} + {L}_{r}} ⋅ {M}_{0} ⋅ g \\ {S}_{FR} = \frac{{F}_{FR}}{\left({P}_{{FR}_{0}}-{p}_{atm}\right)} = \frac{1}{\left({P}_{{FR}_{0}}-{p}_{atm}\right)} ⋅ \frac{{t}_{fl}}{{t}_{f}} ⋅ \frac{{L}_{r}}{{L}_{f} + {L}_{r}} ⋅ {M}_{0} ⋅ g \\ {S}_{RL} = \frac{{F}_{RL}}{\left({P}_{{RL}_{0}}-{p}_{atm}\right)} = \frac{1}{\left({P}_{{RL}_{0}}-{p}_{atm}\right)} ⋅ \frac{{t}_{rr}}{{t}_{r}} ⋅ \frac{{L}_{f}}{{L}_{f} + {L}_{r}} ⋅ {M}_{0} ⋅ g \\ {S}_{RR} = \frac{{F}_{RR}}{\left({P}_{{RR}_{0}}-{p}_{atm}\right)} = \frac{1}{\left({P}_{{RR}_{0}}-{p}_{atm}\right)} ⋅ \frac{{t}_{rl}}{{t}_{r}} ⋅ \frac{{L}_{f}}{{L}_{f} + {L}_{r}} ⋅ {M}_{0} ⋅ g\end{matrix}\right.$

Avec S_{FL} la section du pneumatique avant gauche, S_{FR} la section du pneumatique avant droit, S_{RL} la section du pneumatique arrière gauche et S_{RR} la section du pneumatique arrière droit, P_{FL0} la pression absolue calculée du pneumatique avant gauche, P_{FR0} la pression absolue calculée du pneumatique avant droit, P_{KL0} la pression absolue calculée du pneumatique arrière gauche et P_{RR0} la pression absolue calculée du pneumatique arrière droit.

Dans le cas où le véhicule automobile 1 est incliné selon une inclinaison non nulle, alors le calcul effectué lors de la deuxième étape de calcul 22 se complexifie car il prend en compte l'inclinaison longitudinale θ et l'inclinaison transversale ϕ de la route 3.

Ainsi, dans cette configuration, lors de la première sous-étape de calcul 31, seule la composante verticale, selon l'axe vertical 8 du véhicule, du poids du véhicule automobile doit être prise en compte étant donné que le véhicule automobile est incliné tel que cela est illustré sur les figures 4 et 5. Le calcul de la répartition des efforts de chacun des pneumatiques est donc différente et prend en compte les angles d'inclinaison. La deuxième sous étape de calcul 32 est également plus complexe que ce qui a été décrit précédemment car il prend en compte les angles de chacune des inclinaisons de la route 3.$\left\{\begin{matrix}{S}_{FL} = \frac{{F}_{FL}}{\left({P}_{{FL}_{0}}-{p}_{atm}\right)} = \frac{1}{\left({P}_{{FL}_{0}}-{p}_{atm}\right)} ⋅ \frac{{t}_{fr}}{{t}_{f}} ⋅ \frac{{L}_{r}}{{L}_{f} + {L}_{r}} ⋅ {M}_{0} ⋅ g ⋅ cos \left(θ\right) ⋅ cos \left(ϕ\right) \\ {S}_{FR} = \frac{{F}_{FR}}{\left({P}_{{FR}_{0}}-{p}_{atm}\right)} = \frac{1}{\left({P}_{{FR}_{0}}-{p}_{atm}\right)} ⋅ \frac{{t}_{fl}}{{t}_{f}} ⋅ \frac{{L}_{r}}{{L}_{f} + {L}_{r}} ⋅ {M}_{0} ⋅ g ⋅ cos \left(θ\right) ⋅ cos \left(ϕ\right) \\ {S}_{RL} = \frac{{F}_{RL}}{\left({P}_{{RL}_{0}}-{p}_{atm}\right)} = \frac{1}{\left({P}_{{RL}_{0}}-{p}_{atm}\right)} ⋅ \frac{{t}_{rr}}{{t}_{r}} ⋅ \frac{{L}_{f}}{{L}_{f} + {L}_{r}} ⋅ {M}_{0} ⋅ g ⋅ cos \left(θ\right) ⋅ cos \left(ϕ\right) \\ {S}_{RR} = \frac{{F}_{RR}}{\left({P}_{{RR}_{0}}-{p}_{atm}\right)} = \frac{1}{\left({P}_{{RR}_{0}}-{p}_{atm}\right)} ⋅ \frac{{t}_{rl}}{{t}_{r}} ⋅ \frac{{L}_{f}}{{L}_{f} + {L}_{r}} ⋅ {M}_{0} ⋅ g ⋅ cos \left(θ\right) ⋅ cos \left(ϕ\right)\end{matrix}\right.$

Dans les deux configurations, la section de chacun des pneumatiques est calculée et l'étape de calibrage est alors terminée.

Tel que cela a été décrit précédemment, l'étape de mesure dynamique peut être réitéré au cours de la session de roulage du véhicule automobile, en fonction d'un ou plusieurs facteurs tels que décrits en [Fig.2]. La troisième étape de calcul permet de nouveau de calculer la valeur de pression de chaque pneumatique, préférentiellement en prenant en compte également la température des pneumatiques, tout comme pour la première étape de calcul. Puis la quatrième étape de calcul permet enfin de calculer la masse embarquée sur véhicule automobile, et ce à partir des sections efficaces calculées lors de la deuxième étape de calcul de l'étape de calibrage ainsi que des valeurs de pression calculées lors de la troisième étape de calcul de l'étape de mesure dynamique.

La masse embarquée M est alors calculée de la manière suivante :
$M = \frac{1}{g ⋅ cos \left(θ\right) ⋅ cos \left(ϕ\right)} ⋅ \left({S}_{FL}⋅{P}_{FL 1}+{S}_{FR}⋅{P}_{FR 1}+{S}_{RL}⋅{P}_{RL 1}+{S}_{RR}⋅{P}_{RR 1}\right)$
avec P_{FL1} la pression relative du pneumatique avant gauche, P_{FR1} la pression relative du pneumatique avant droit, P_{RL1} la pression relative du pneumatique arrière gauche et P_{RR1} la pression relative du pneumatique arrière droit, c'est-à-dire la différence entre la pression P₀ de chaque pneumatique et la pression atmosphérique.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixé, et permet de proposer un procédé d'estimation de la masse embarquée du véhicule automobile à l'arrêt, en temps réel et pouvant prendre en compte une inclinaison de la route. Des variantes non décrites ici pourraient être mises en œuvre sans sortir du contexte de l'invention, dès lors que, conformément à l'invention, elles comprennent un procédé d'estimation conforme à l'invention.

## Revendications

1. Procédé d'estimation (10) en temps réel d'une masse embarquée (M) d'un véhicule automobile (1) équipé d'un système de surveillance (6) de pression des pneumatiques (2) dudit véhicule automobile (1), comprenant :
- une étape de calibrage (11) avant une session de roulage du véhicule automobile (1) comprenant :
- une première étape de calcul (21) d'une valeur de pression de chaque pneumatique (2) du véhicule automobile (1) à l'aide du système de surveillance (6) de pression des pneumatiques (2),
- une deuxième étape de calcul (22) d'une valeur de section efficace de chaque pneumatique (2) à partir des valeurs de pression de chaque pneumatique (2) calculées lors de la première étape de calcul (21) et d'une masse initiale (M₀) et des dimensions du véhicule automobile (1),
- une étape de mesure dynamique (12) au cours d'une session de roulage du véhicule automobile (1) comprenant :
- une troisième étape de calcul (23) d'une valeur de pression de chaque pneumatique (2) du véhicule automobile (1) à l'aide du système de surveillance (6) de pression des pneumatiques,
- une quatrième étape de calcul (24) de la masse embarquée (M) du véhicule automobile (1) à partir des valeurs de pression de chaque pneumatique (2) calculées lors de la troisième étape de calcul (23) et des valeurs de section efficace de chaque pneumatique (2) calculées lors de la deuxième étape de calcul (22).

2. Procédé d'estimation (10) selon la revendication 1, au cours duquel la première étape de calcul (21) et la troisième étape de calcul (23) sont mises en œuvre en prenant en compte une température de chaque pneumatique (2), ladite température étant mesurée par le système de surveillance (6) de pression des pneumatiques (2).

3. Procédé d'estimation (10) selon la revendication 1 ou 2, au cours duquel, lors de la deuxième étape de calcul (22), la masse initiale (M₀) et les dimensions du véhicule automobile (1) sont établies par défaut en fonction d'un modèle du véhicule automobile (1).

4. Procédé d'estimation (10) selon l'une quelconque des revendications précédentes, comprenant une étape préliminaire (13), antérieure à chacune des étapes de calcul, de détermination d'au moins une inclinaison (θ, ϕ) d'une route (3) sur laquelle le véhicule automobile (1) est à l'arrêt.

5. Procédé d'estimation (10) selon la revendication précédente, au cours duquel l'inclinaison (θ, ϕ) de la route (3) est déterminée à l'aide d'une centrale inertielle du véhicule automobile.

6. Procédé d'estimation (10) selon la revendication 4 ou 5, au cours duquel une inclinaison transversale (ϕ) et une inclinaison longitudinale (θ) sont déterminées et prises en compte.

7. Procédé d'estimation (10) selon l'une quelconque des revendications 4 à 6, au cours duquel la deuxième étape de calcul (22) comprend une première sous-étape de calcul (31) de la répartition des efforts par pneumatique du véhicule automobile (1) en fonction de la masse initiale (M₀) du véhicule automobile (1) et des distances (L, t) entre les pneumatiques (2) et une composante verticale du poids du véhicule automobile (1) passant par un centre de gravité (7) du véhicule automobile (1), lesdites distances (L, t) étant déduites des dimensions du véhicule automobile (1), et une deuxième sous-étape de calcul (32), postérieure à la première sous-étape de calcul (31), de la section efficace de chaque pneumatique (2) à partir des valeurs de répartition des efforts de chaque pneumatique (2) du véhicule automobile (1).

8. Procédé d'estimation (10) selon l'une quelconque des revendications précédentes, au cours duquel l'étape de mesure dynamique (12) est réitérée à chaque arrêt du véhicule automobile (1).

9. Procédé d'estimation (10) selon l'une quelconque des revendications précédentes, au cours duquel l'étape de mesure dynamique (12) est réitérée à chaque arrêt du véhicule automobile (1) dont la durée est supérieure à une période de temps de 120 secondes.

10. Procédé d'estimation (10) selon l'une quelconque des revendications précédentes, au cours duquel l'étape de mesure dynamique (12) est réitérée à chaque arrêt du véhicule automobile (1) au cours duquel un événement défini se produit.

11. Véhicule automobile (1) comprenant un système de surveillance (6) de pression des pneumatiques (2) apte à mesurer une pluralité de données liées aux pneumatiques (2) dudit véhicule automobile (1) et au moins un module de commande (5) configuré pour calculer une masse embarquée (M) du véhicule automobile (1) à partir des données mesurées par le système de surveillance (6) de pression des pneumatiques (2), le véhicule automobile (1) étant apte à mettre en œuvre un procédé d'estimation (10) en temps réel de la masse embarquée (M) du véhicule automobile (1) selon l'une quelconque des revendications précédentes.
